Europäisches Patentamt

European Patent Office

Office européen des brevets

(19)

(11) Publication number: **0 031 599**
**B1**

(12) **EUROPEAN PATENT SPECIFICATION**

(45) Date of publication of patent specification: **30.11.83**    (51) Int. Cl.³: **E 03 B 3/03**

(21) Application number: **80200749.2**

(22) Date of filing: **07.08.80**

(54) **Process and device for collecting rainwater.**

(30) Priority: **19.12.79 NL 7909176**

(43) Date of publication of application:
**08.07.81 Bulletin 81/27**

(45) Publication of the grant of the patent:
**30.11.83 Bulletin 83/48**

(84) Designated Contracting States:
**AT BE DE FR GB IT LU NL SE**

(56) References cited:
**DE - A - 2 747 008**
**FR - A - 634 710**
**NL - A - 6 705 919**

(73) Proprietor: **CURVER B.V.**
**Spoorlaan Noord 92**
**NL-5121 WX Rijen (NL)**

(72) Inventor: **Van Berne, Joost**
**Geer 94**
**NL-5104 HG Dongen (NL)**
Inventor: **Van Schaick, Franciscus Hendrikus**
**Mendelssohnplein 36d**
**NL-3131 RJ Vlaardingen (NL)**

(74) Representative: **Hoogstraten, Willem Cornelis Roeland**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Process and device for collecting rainwater

The invention relates to a process for storing rainwater and for discharging excess rainwater, comprising leading the rainwater from a downpipe into a storage vessel and discharge excess water to the sewer via an overflow.

From NL-A-6705919 a device is known whereby the water is supplied to the vessel via a downpipe that empties into the top part of the storage vessel. When the vessel is full the rainwater reaching it flows practically directly to the sewer via the overflow.

A disadvantage of this known process is that once water has been collected it sometimes remains in the vessel for a long time and is not automatically replaced by fresh water the next time rain falls down. As a result the quality of the stored water deteriorates. The quality deteriorates even further due to the fact that when rain falls down and the vessel is empty or partly filled, first the water contaminated with dirt, for instance originating from the roof, is collected, while the less contaminated water that comes next is discharged to the sewer.

The invention provides a process for storing rainwater and for discharging excess rainwater, comprising leading the rainwater from a downpipe into a storage vessel and discharging excess water to a sewer via an overflow, this process being characterised in that the water introduced into the vessel near the bottom of the vessel.

In an advantageous way under normal circumstances the rainwater is led to the storage vessel from a throughgoing downpipe and the water in excess of the vessel's capacity is led to the throughgoing downpipe via the overflow and under blocked circumstances of the vessel route the rainwater is discharged by bypassing it through the throughgoing downpipe.

A downpipe is here understood to mean a pipe in which the water moves by gravity. A throughgoing downpipe is here meant to be a downpipe possessing a discharge possibility apart from the vessel.

It is true that a device with a throughgoing downpipe is known from DE-A-2747008, but the process to be carried out with this device leads to the same disadvantages as described above, since the contents of the vessel cannot flow through via the line indicated by 10.

The water flowing down the vertical throughgoing downpipe can first be led to one side of the downpipe and then be led into a branch pipe situated further away in the direction of flow on that side and subsequently be led into the vessel.

Use of the process according to the invention ensures that the amount of fresh rainwater collected and the through-flow of the storage vessel are at all times as large as possible. If the vessel is filled with water contaminated with roof dirt as a result of small showers, or if the vessel has for a long time been entirely or partly filled, the total contents of the vessel will be renewed the next time there is a heavy or prolonged rain. In addition, a purifying activity can take place as the water flowing over the bottom entrains the dirt settled on the bottom to the overflow.

The invention also relates to a device for storing rainwater and for discharging excess rainwater, comprising a storage vessel with a feed opening and an overflow, characterized in that the feed opening is situated near the bottom of the storage vessel.

There is advantage in providing the device with a throughgoing downpipe section.

According to a preferred embodiment of the invention the device comprises a vertical throughgoing downpipe section possessing near its upper end on one wall side a water-guiding baffle that forms a narrowed passage along the opposite wall side, a branch pipe, connected at a place under the narrowed passage, with a water-catching part reaching into the throughgoing downpipe section, a storage vessel with a feed opening, situated close to the bottom, to which the branch pipe is connected and an overflow opening, located near the upper side of the vessel, that empties into the throughgoing downpipe section.

For incorporation of this device into, for instance, a vertical rainwater pipe, the upper end of the vertical throughgoing downpipe section is given a sleeve-like form, while the lower end possesses a constricted insert end.

To offer some expansion potential in the event the water contents of the vessel freeze, the side walls of the vessel can be corrugated.

Below the invention will be elucidated with reference to an example, represented in the drawing, of a preferred embodiment of the device according to the invention.

In the drawing:

Fig. 1 is a side view of the device according to the invention, mounted in a rainwater pipe;

Fig. 2 is a section according to a vertical symmetry plan of the device according to Fig. 1 and

Fig. 3 is a horizontal section along line III—III in Fig. 2.

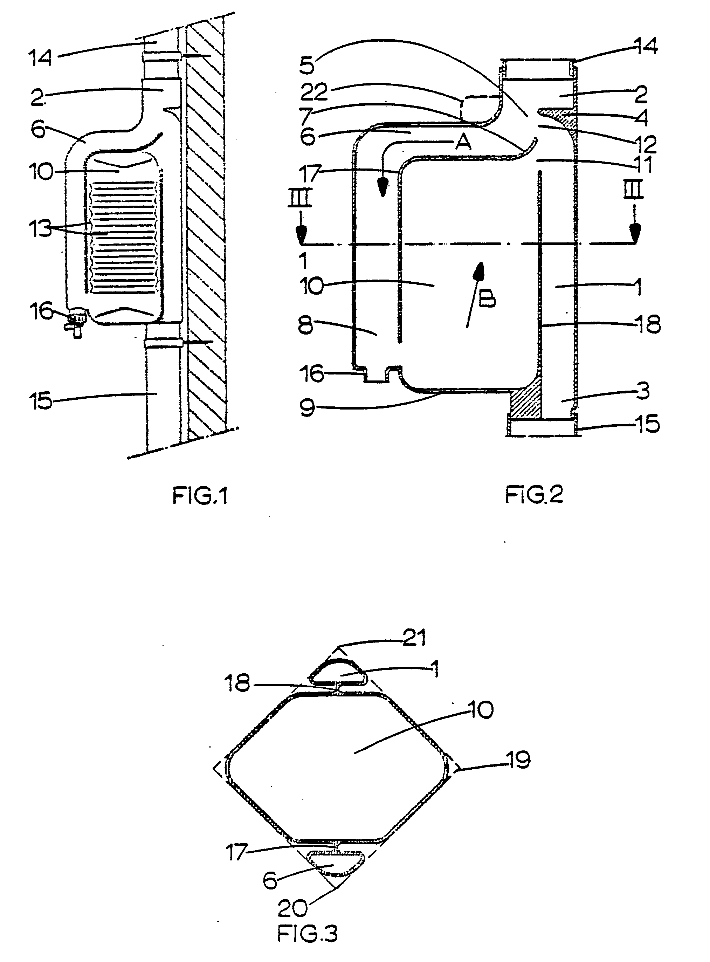

The device consists of a vertical throughgoing downpipe section 1 with upper end 2 and lower end 3. By means of water-guiding baffle 4 on the pipe wall a narrowed passage 5 is obtained along the opposite side of the pipe wall. At some distance, at a place under the narrowed passage, a branch pipe 6 is connected to the downpipe which reaches into the throughgoing downpipe with a water-catching part 7. The branch pipe is connected to a feed opening 8 near the vessel bottom 9 of the storage vessel 10. The storage vessel 10 possesses an overflow opening 11 which empties into the vertical throughgoing downpipe section 1. The vertical downpipe section is throughgoing, which means that the upper end 2 is in direct connection with the lower end 3 via an opening 12 below the baffle 4. The wall of the vessel is at least in part corrugated, which is indicated by 13 in Fig. 1. The rainwater pipe section 14 sticks into the upper end 2 of the vertical throughgoing downpipe section, which in its turn sticks into the rainwater pipe section 15 with its lower end 3. On a drain point 16, located in a line with branch pipe 6, a drain cock is provided.

Water that is supplied via rainwater pipe section 14 is led through the modified passage that is formed by the water-guiding baffle 4 on one side of the vertical downpipe section, after which it is forced into the branch pipe 6 by the water-catching part 7. Via feed opening 8 the water gradually fills the storage vessel 10, Water in excess of the vessel's capacity leaves the vessel via overflow opening 11 and is then discharged to the sewer via the vertical throughgoing downpipe section 1 and the rainwater pipe section 15.

When the part of flow indicated by the arrows A and B is clogged, which may occur for instance when the water in the branch pipe 6 or the vessel 10 is frozen, the water supplied can be discharged via opening 12 and the vertical downpipe section 1, instead of through branch pipe 6 and storage vessel 10.

In the event the water contents freeze, the water dislodged by the expansion of the ice can flow via the overflow 11.

Fig. 3 shows a horizontal section of the device according to a preferred embodiment. The forms of the storage vessel 10, the branch pipe 1 and the vertical throughgoing downpipe section 1 are such that around them a circumscribed imaginary rectangular parallelepiped, see dotted line 19, is possible, the branch pipe 6 being positioned along the first and the vertical throughgoing downpipe section 1 along the second of two diagonally opposite corners, 20 and 21 respectively.

This embodiment is particularly advantageous if the device is to be mounted in a rainwater pipe positioned in a corner formed by two walls, at the corner of a building or precisely on the partition line between two contiguous houses. In the last case the device can be turned through a 90° angle.

The entire device can advantageously be made in one piece from plastic using a blow-moulding technique. The mould parting line of a split cavity mould can be laid in accordance with the symmetry plane drawn in Fig. 2. Starting from a tubular parison, the branch pipe 6 and the vertical downpipe section 1 can be formed beside the vessel 10 by pressing together opposite parison walls, so that the partitioned walls 17 and 18 are formed (see Figs. 2 and 3). Baffle 4, too, is formed this way.

The device is mounted in a vertical rainwater pipe by pushing it up and lowering it after part of said pipe, having a height somewhat smaller than the height of the device, has been sawn off. The vertical downpipe section 1 is in a line with the rainwater pipe. The above is preferably done so that the drain point 16 can readily be operated by a user standing upright.

If desired, it is also possible to incorporate the device with accessories in a rainwater discharge circuit. This can, for instance, be the case if an existing rainwater pipe is positioned so that mounting of the vertical downpipe section in a line with the pipe will present problems.

If desired, the total area through which water may flow can be adapted to the existing discharge circuit. Thus, the pipe wall on the level of the baffle 4 can locally be widened, as indicated by dotted line 22.

The device is extremely suitable for collecting and storing small amounts of rainwater, for instance between 5 and 20 litres.

## Claims

1. Process for storing rainwater and for discharging excess rainwater, comprising leading the rainwater from a downpipe into a storage vessel and discharging excess water to a sewer via an overflow, this process being characterized in that the water is introduced into the vessel near the bottom of the vessel.

2. Process according to claim 1, characterized in that under normal circumstances the rainwater is led to the storage vessel from a throughgoing downpipe and the water in excess of the vessel's capacity is led to the throughgoing downpipe via the overflow and in that under blocked conditions of the vessel route the rainwater is discharged by bypassing it through the throughgoing downpipe.

3. Process according to claim 2, characterized in that the water flowing down the vertical throughgoing downpipe is first led to one side of the downpipe and is then led into a branch pipe, situated further away in the direction of flow on that side, and is subsequently introduced into the vessel.

4. Device for storing rainwater and for discharging excess rainwater comprising a storage vessel with a feed opening and an overflow, characterized in that the feed opening is situated near the bottom of the storage vessel.

5. Device according to claim 4, characterized in that the device comprises a vertical throughgoing downpipe section possessing on one side of its wall near its top a water-guiding baffle that forms a narrowed passage along the opposite wall side, a branch pipe connected at a place under the narrowed passage with a water-catching part reaching into the throughgoing downpipe section, a storage vessel with a feed opening situated close the bottom to which the branch pipe is connected and an overflow opening located near the upperside of the vessel that empties into the throughgoing downpipe section.

6. Device according to claim 5, characterized in that the ends of the vertical downpipe section are provided with means for connecting the device to a rainwater discharge circuit.

7. Device according to claim 6, characterized in that the means for connecting consist of a sleeve-shaped inlet provided at the upper end of the vertical pipe section and a constricted insert end provided at the lower end of the vertical downpipe section.

8. Device according to any one of the claims 4 through 7, characterzied in that the walls of the storage vessel are corrugated.

9. Device according to any one of the claims 5 through 8, characterized in that a drain point is provided in the bottom in a line with the axis of the discharge end of the branch pipe.

10. Device according to any one of the claims 4 through 9, characterized in that the device is made of plastics material.

11. Device according to claim 10, characterized in that the device is manufactured by blow-moulding.

12. Device according to any one of the claims 5 through 11, characterized in that the forms of the storage vessel, the branch pipe and the vertical downpipe section are such that around them a circumscribed imaginary rectangular parallelepiped is possible, the branch pipe being positioned along the first and the downpipe along the second of two diagonally opposite corners.

## Revendications

1. Procédé pour stocker l'eau de pluie et pour évacuer l'eau de pluie en excès, consistant à guider l'eau de pluie depuis un tuyau de descente dans un réservoir de stockage et à évacuer l'eau de pluie en excès en direction d'un égout par l'intermédiaire d'un trop-plein, ce procédé étant caractérisé en ce que l'eau est introduite dans le réservoir à proximité du fond de ce dernier.

2. Procédé selon la revendication 1, caractérisé en ce que dans des conditions normales, l'eau de pluie est envoyée au réservoir de stockage à partir d'un tuyau de descente traversant et l'eau en excès par rapport à la capacité du réservoir est envoyée au tuyau de descente traversant par l'intermédiaire du trop-plein, et que dans des conditions de blocage de la voie d'acheminement au réservoir, l'eau de pluie est évacuée par dérivation dans le tuyau de descente traversant.

3. Procédé selon la revendication 2, caractérisé en ce que l'eau tombant à l'intérieur du tuyau de descente traversant vertical est tout d'abord envoyée à un côté du tuyau de descente, puis est envoyée dans un tuyau de dérivation situé plus loin dans la direction d'écoulement sur ce côté et est ensuite introduite dans le réservoir.

4. Dispositif pour stocker l'eau de pluie et pour évacuer l'eau de pluie en excès, comprenant un réservoir de stockage muni d'une ouverture d'admission et d'un trop-plein, caractérisé en ce que l'ouverture d'admission est située à proximité du fond du réservoir de stockage.

5. Dispositif selon la revendication 4, caractérisé en ce qu'il comporte un élément de tuyau de descente traversant vertical possédant, sur un côté de sa paroi et à proximité de sa partie supérieure, une chicane de guidage de l'eau qui forme un passage rétréci le long du côté opposé de la paroi, un tuyau de dérivation raccordé, en un emplacement situé au-dessous du passage rétréci, à une partie captant l'eau et débouchant dans l'élément de tuyau de descente traversant, un réservoir de stockage comportant une ouverture d'admission située à proximité du fond et à laquelle le tuyau de dérivation est raccordé, et un orifice de trop-plein situé à proximité de la face supérieure de réservoir et qui se déverse dans l'élément de tuyau de descente traversant.

6. Dispositif selon la revendication 5, caractérisé en ce que les extrémités de l'élément de tuyau de descente vertical sont munies de moyens permettant le raccordement du dispositif à un circuit d'évacuation de l'eau de pluie.

7. Dispositif selon la revendication 6, caractérisé en ce que les moyens de raccordement sont constitués par une admission en forme de manchon prévue à l'extrémité supérieure de l'élément de tuyau vertical et par une extrémité d'insertion rétrécie prévue à l'extrémité inférieure de l'élément de tuyau de descente vertical.

8. Dispositif selon l'une quelconque des revendications 4 à 7, caractérisé en ce que les parois du réservoir de stockage sont ondulées.

9. Dispositif suivant l'une quelconque des revendications 5 à 8, caractérisé en ce qu'un point de purge est prévu dans le fond du réservoir en étant aligné avec l'axe de l'extrémité d'évacuation du tuyau de dérivation.

10. Dispositif suivant l'une quelconque des revendications 4 à 9, caractérisé en ce que le dispositif est réalisé en matière plastique.

11. Dispositif suivant la revendication 10, caractérisé en ce que le dispositif est fabriqué par moulage par soufflage.

12. Dispositif selon l'une quelconque des revendications 5 à 11, caractérisé en ce que les formes du réservoir de stockage, du tuyau de dérivation et de l'élément de tuyau de descente vertical sont telles qu'il est possible de circonscrire ces formes avec un parallélépipède rectangulaire imaginaire, le tuyau de dérivation et le tuyau de descente étant disposés respectivement le long d'un premier et d'un second de deux angles opposés en diagonale.

## Patentansprüche

1. Verfahren zum Speichern von Regenwasser und zum Ableiten von überschüssigem Regenwasser, umfassend die Zuführung von Regenwasser aus einem Fallrohr in einem Speicherbehälter und das Ableiten von überschüssigem Wasser über einen Überlauf in einen Abwasserkanal, dadurch gekennzeichnet, daß das Wasser in der Nähe des Behälterbodens in den Behälter eingeleitet wird.

2. Verfahren nach Anspruch 1, dadurch gekennzeichnet, daß normalerweise das Regenwasser dem Speicherbehälter aus einem durchgehenden Fallrohr und das Wasser, das die Behälterkapazität überschreitet, dem durchgehenden Fallrohr über den Überlauf zugeführt wird und daß, wenn der Behälterdurchgang blockiert ist, das Regenwasser durch Umgehung des Behälterdurchgangs durch das durchgehende Fallrohr abgeleitet wird.

3. Verfahren nach Anspruch 2, dadurch gekennzeichnet, daß das das vertikale durchgehende Fallrohr hinunterfließende Wasser zuerst zu einer Seite des Fallrohrs und dann in ein Abzweigrohr geleitet wird, das in einer Entfernung in Strömungsrichtung auf dieser Seite liegt, und dann in den Behälter eingeleitet wird.

4. Vorrichtung zum Speichern von Regenwasser und zum Ableiten von überschüssigem Regenwasser, umfassend einen Speicherbehälter (10) mit einer Zuflußöffnung (8) und einem Überlauf (11), dadurch gekennzeichnet, daß die Zuflußöffnung (8) in der Nähe des Bodens (9) des Speicherbehälters (10) angeordnet ist.

5. Vorrichtung nach Anspruch 4, dadurch gekennzeichnet, daß die Vorrichtung einen vertikalen durchgehenden Fallrohrabschnitt (1), der auf einer Seite seiner Wand in der Nähe seines oberen Endes eine wasserleitende Ablenkplatte (4) aufweist, die einen verengten Durchgang entlang der gegenüberliegenden Wand bildet, ein Abzweigrohr (6), das an einer Stelle unter dem verengten Durchgang mit einem Wasserauffangteil (7) verbunden ist, das in den durchgehenden Fallrohrabschnitt (1) hineinreicht, einen Speicherbehälter (10) mit einer dicht am Boden (9) angeordneten Zuflußöffnung (8), mit der das Abzweigrohr (6) verbunden ist, und eine Überlauföffnung (11) aufweist, die in der Nähe des oberen Endes des Behälters (10) angeordnet ist und in den durchgehenden Fallrohrabschnitt (1) mündet.

6. Vorrichtung nach Anspruch 5, dadurch gekennzeichnet, daß die Enden des vertikalen Fallrohrabschnitts (1) mit Mitteln versehen sind, um die Vorrichtung mit einem Regenwasserableitungskreis zu verbinden.

7. Vorrichtung nach Anspruch 6, dadurch gekennzeichnet, daß die Verbindungsmittel aus einem muffenförmigen Einlaß am oberen Ende (2) des vertikalen Rohrabschnitts (14) und einem verengten Einsteckende (3) am unteren Ende des vertikalen Fallrohrabschnitts (1) bestehen.

8. Vorrichtung nach einem der Ansprüche 4 bis 7, dadurch gekennzeichnet, daß die Wände (13) des Speicherbehälters (10) gewellt sind.

9. Vorrichtung nach einem der Ansprüche 5 bis 8, dadurch gekennzeichnet, daß eine Zapfstelle (16) im Boden in einer Linie mit der Achse des Auslaßendes (3) des Abzweigrohrs (6) vorgesehen ist.

10. Vorrichtung nach einem der Ansprüche 4 bis 9, dadurch gekennzeichnet, daß die Vorrichtung aus Kunststoffmaterial hergestellt ist.

11. Vorrichtung nach Anspruch 10, dadurch gekennzeichnet, daß die Vorrichtung durch Blasformen hergestellt ist.

12. Vorrichtung nach einem der Ansprüche 5 bis 11, dadurch gekennzeichnet, daß die Formen des Speicherbehälters (10), des Abzweigrohrs (6) und des vertikalen Fallrohrabschnitts (1) so sind, daß um sie herum ein umschreibendes imaginäres rechteckiges Parallelepiped denkbar ist, wobei das Abzweigrohr (6) entlang der ersten und das Fallrohr (1) entlang der zweiten von zwei diagonal gegenüberliegenden Ecken (20 bzw. 21) angebracht sind.

FIG.1

FIG.2

FIG.3